# EUROPEAN PATENT SPECIFICATION

(11) **EP 2 776 230 B1**
(45) Date of publication and mention of the grant of the patent: **14.03.2018**
(21) Application number: 12786977.4
(22) Date of filing: 12.11.2012
(51) Int. Cl.: B29C 45/14, B29C 33/14, B29L 31/30

(54) **METHOD TO MANUFACTURE A PANEL COMPRISING A SUBSTRATE AND AT LEAST ONE COMPONENT ADHERED THERETO AND MOULD SYSTEM**
VERFAHREN ZUR HERSTELLUNG EINER TAFEL MIT EINEM SUBSTRAT UND MINDESTENS EINER DARAN HAFTENDEN KOMPONENTE UND FORMSYSTEM
PROCÉDÉ DE FABRICATION D'UN PANNEAU COMPORTANT UN SUBSTRAT ET AU MOINS UN COMPOSANT ADHÉRÉ À CELUI-CI ET SYSTÈME DE MOULE

(30) Priority: 11.11.2011 EP 11188738
(43) Date of publication of application: 17.09.2014
(73) Proprietor: Recticel N.V., 1140 Brussels (BE)
(72) Inventor: DE WILDE, Peter, B-9230 Wetteren (BE); BRACKE, Kris, B-9230 Wetteren (BE); DE PAUW, Peter, B-9230 Wetteren (BE)
(74) Representative: Haverkamp, Jens
(86) International application number: PCT/EP2012/072389
(87) International publication number: WO 2013/068586

(56) References cited:
- DE-A1- 19 818 881
- GB-A- 2 201 629
- JP-A- 3 193 430
- JP-A- 11 048 877
- JP-A- 57 126 621
- JP-A- 2006 151 042
- US-A- 5 056 199
- US-A1- 2005 242 469

## Description

The invention is directed to a method to manufacture a panel comprising a substrate with at least one surface of plastic material and further comprising at least one component adhered to the surface of plastic material of the substrate. The invention further relates to a mould system for manufacturing a panel comprising a substrate with at least one surface of plastic material and further comprising at least one component adhered to the surface of plastic material of the substrate.

Panels of this kind are used for example as backing structures of trim panels, which may resemble the interior lining of vehicles, boats or the like. On the front surface - a first surface - of the substrate, typically a flexible moulded skin with a certain grained structure is applied. The grained structure of the flexible skin may be one to let the skin look like leather. In case the lining is to be designed as a soft touch lining, one or more elastic foam layers are applied between the front surface of the panel and the flexible skin.

On the second surface - the backside surface (also called B-surface) - of the panel, locking components are arranged when the panel is used as for example a car interior trim panel. These locking components are part of a fastener assembly, of which the other part typically is a pin integrally formed on the part of the vehicle, on which the trim panel is to be anchored. Such trim panel may carry ten or more locking components on its B-surface to be used to fasten it to the inside of a car part. These locking components arranged on the B-surface of the panel are usually called doghouses.

Doghouses are typically injection-moulded components. According to one prior art embodiment, the doghouses are integrally manufactured with the substrate by way of an injection moulding or a die casting process. Forming the doghouses integral with the substrate, the plastic used needs to satisfy the requirements of the one or more doghouses and the requirements of the substrate. Typically the substrate material is of a rigid nature. Since the mounting forces and the forces applied to such a trim panel, when in use, are conveyed from the trim panel into the doghouses and from there into the complementary anchoring pins of the vehicle part, the doghouses need to be manufactured from a material, which resists these forces. The material used to manufacture this kind of panels, is typically a thermoplastic material, like ABS, PP, or glass fiber reinforced PP. The drawback of this prior art panel is its weight, which is regarded to be rather high. It is a need in vehicle design to minimize weight in almost any part. Therefore, composite panels more specifically light-weight composite panels have been developed. The substrates of such panels are made of for example a polyurethane (PU) foam, which is usually reinforced by fibers. According to this prior art, the substrate and the doghouses are each manufactured individually. In a subsequent step the doghouses are fastened to the substrate. One known technique to fasten a doghouse to the substrate is to use rivets or screws. The use of rivets or screws is not always possible, in particular when the front surface of the substrate is not allowed to show anything else but the substrate surface itself. In such cases the doghouses are glued to the B-surface of the substrate with an adhesive introduced between the doghouse and the surface of the substrate. Ultrasonic welding is another typical method for fastening doghouses to a substrate. In order to be able to resist the necessary forces, the doghouses have a flat base member as contact surface, which is designed large enough to provide the contact area needed. Typically the contact surface is a lot larger than the area virtually needed by the doghouse.

A drawback of the composite panels described above is that, in contrast to forming the doghouses integral with the substrate, a further process step is needed. This is accepted in order to meet the light-weight requirements. In the manufacturing process of such trim panels, it is encountered, that sometimes one or more of several doghouses to be attached to the B-surface of the substrate indeed has not been fastened and is thus missing. Typically, such manufacturing mistake is detected at the end of the manufacturing line. These parts need to be identified and sorted from the usual logistic flow of material. In particular, when trim panels carry 10, 14 or even more doghouses, the chance that one doghouse has not been mounted, is not negligible.

A further prior art substrate panel is disclosed in US 2003/0194542 A1. According to the method disclosed in this prior art document, in a first step the substrate is formed by a thermoforming process. Subsequently at least one component, to be attached to the panel, is moulded against one of the surfaces of the thus pre-manufactured panel and thus brought into the desired shape from a molten thermoplastic resin. The molten thermoplastic resin is then allowed to cool. According to this method the component is formed against a pre-manufactured substrate. This method involves the design and the use of rather complex moulds, in particular in case the component to be moulded against the substrate has a complex geometry and/or openings, undercuts or the like.

GB 2 201 629 A discloses a method of insert moulding a mounting element in a body of rigid foamed plastics material. The mounting element may, for instance, be used to mount a door panel to a motor-vehicle body. It comprises an anchor portion which is embedded in the plastics material by inserting the mounting element into a mould insert in a mould before the body of plastic material is formed by moulding. To prevent the plastic material from flowing around the mounting element into the mould insert holding the mounting element, a sealing element is provided around the periphery of a mounting portion of the mounting element, which is in cooperation with a peripheral wall of the mould insert.

In the light of the prior art sketched out above it is an object of the invention to provide a method to adhere a component to a substrate in order to manufacture a panel, which method allows a secure fastening of a component to at least one of the surfaces of the substrate without influencing the other surface of the substrate in any visible manner, which method is more fail-safe and may be carried out with less complex moulds than in prior art while being highly versatile in application.

This technical problem is solved by a method with the features of claim 1.

The technical problem is also solved by way of a panel comprising a substrate with at least one surface of plastic material and further comprising at least one component adhered to the surface of plastic material of the substrate, said panel having been manufactured with the steps of the claimed method.
Further, this technical problem is solved by way of a mould system according to claim 10. According to the invention, in order to adhere and thereby fasten the component to the substrate and thus to manufacture a panel, use is made of the bonding forces of the plastic compound, when these are effective during the primary forming process of the substrate. This primary forming process will typically be a moulding process, whereas such moulding process can be any high or low pressure moulding process such as injection moulding or reaction injection moulding or the like. With this type of adhering a component to a surface of a substrate, bonding forces may be achieved which resist the forces applied for example to a doghouse being arranged for example on the B-surface of a panel as a backing structure and as such being part of a trim panel for an inner lining of a vehicle. Such adhering, when bringing appropriate materials in contact to each other, can be even better than when using an adhesive. Pull-off forces being for example twice as high as those using conventional adhesive techniques have been obtained when using the method claimed. With pull-off forces being that high, a first advantage of the invention becomes evident. Due to the possible high pull-off forces to be achieved, the surface area of the component to be fastened to one of the surfaces, in case of a doghouse typically the B-surface, may be designed smaller compared to the necessary relatively large contact surface needed when using pre-known fastening techniques like gluing. Thus the weight of the component of the panel may be kept low. In this respect, it is to be kept in mind, that such panel may comprise numerous components.

The formed substrate may be formed out of one single plastic compound (such as a thermoplastic material) by way of such moulding process. Otherwise, the substrate can be a composite sandwich panel. The common composite sandwich structure is made up of a core, which can be a foam or a foam filled open structure such as a foam filled honeycomb, and outer surface layers. Between the core and the outer layers, reinforcing layers such as glass fiber layers may be applied. Such panels are known to be strong materials, but weigh significantly less, and fulfill therefore the need of "stronger-lighter" materials in for instance automotive trim panels. The method according to the invention can be applied to such composite sandwich panels, whereof at least one surface layer is manufactured by way of such primary forming process, which process is used to adhere the one or more components to said surface. With the process disclosed in EP 2,039,489 A1 light-weight panels may be manufactured, which comply with all requirements needed so that the substrate may be used as a backing structure of a trim panel, in particular for an inner lining of a part of a vehicle, for example the inside of a door or as a dashboard panel. Therefore, by way of reference made to EP 2,039,489 A1, the disclosure of this prior art document is made to be part of the disclosure of this specification.

The components to be adhered to the substrate, are pre-manufactured and positioned in the mould, prior to the introduction of the substrate forming plastic compound into said mould. Thus, according to the invention the substrate is formed against the contact surface of the one or more components to be adhered to its surface. Compared to gluing components, for example doghouses to the B-surface of a substrate it will be appreciated, that it is easier to control the presence of a component to be adhered to the substrates, when this is needed to be introduced into the mould than to control gluing numerous components onto the surface of a pre-manufactured substrate in an assembly line. It will also be understood, that the mould needed to manufacture such panel is less complex than a mould needed in order to conduct the method according to US 2003/0194542 A1. Further, even higher pull-off forces were encountered compared to those achieved when moulding the component against a pre-manufactured substrate.

Virtually, different kinds of components may be used to be fastened to one of the surfaces of the substrate. Typically but not limiting, these components will be some kind of fastening means, for example doghouses which are fastening appliances in case the panel is to be used as a backing structure of a trim panel such as a vehicle door. Other examples of components are for instance locators, ribs, reinforcement members, attachments for supports, flanges.

Typically the substrate manufactured in the mould is rigid. The term "rigid" defining a property of the panel, does not necessarily mean, that the panel is not bendable or does not have certain flexible properties. This term is to be understood as defining the panel to be dimensionally stable. Dimensionally stable are substrates typically used as a backing structure for trim panels of inner linings for vehicles. In contrast, a flexible skin, which could be applied to the front surface of such panel, is not regarded as having rigid properties in terms of this disclosure.

According to the method claimed in the first step, a mould is provided with at least one holding fixture. The mould typically has a number of holding fixtures, each being a recessed area in respect to the mould surface adjacent to such fixture. The number of holding fixtures represents the maximum number of components to be fastened to one of the surfaces of a substrate being primarily formed in the mould. These holding fixtures are openings with respect to the mould surface, into which, in order to adhere a component to the substrate, a component support for holding the component during the moulding process is inserted. According to the invention, at least two different inserts, at least one of which is a component support, are adapted for being alternatively inserted into one and the same holding fixture. I.e., these at least two inserts are differently shaped. For instance, two differently shaped component supports may be used alternatively, wherein each component support corresponds to a different component or to a different positioning of a component to be adhered to the substrate. Alternatively or additionally, one insert may be a dummy support. Such dummy support is used in case that the holding fixture is not used to position a component to be adhered to the substrate. The dummy support is then inserted into the holding fixture to simply fill the recessed area of such holding fixture and thereby to complete the mould surface in this area. The surface of a support facing into the mould is thus part of the effective mould surface. Such completion may be in the form that with such dummy support the mould surface is re-built to be in the shape as if there would be no holding fixture at this place of the mould surface. To provide for the option of replacing one insert by another insert, the inserts are preferably adapted to be detachably connected to the holding fixture. In other words, means for detachably connecting the insert to the holding fixture may be provided.

It is also preferred that means for removing the insert from the holding fixture are provided, which means are operable from outside the mould. For instance, the mould may comprise channels that connect the holding fixtures with the outside of the mould. Each insert my comprise a threaded bar, which is put through one of the channels and secured outside the mould with a nut. If the component support is to be removed, the bar can be used to push the component support out of the holding fixture. Alternatively, air channels may be used to apply vacuum to the holding fixture, whereby the component support is held in position. Such air channels will be connected to a pump outside the mould. Here the component support can be pushed out of the holding fixture by simply applying a positive pressure to such channels. In any case, means for removing the insert should preferably not provide a protrusion on the inside of the mould.

In order to adhere a component to the surface of the substrate into such holding fixture, a component support is inserted. Such component support has a receptacle which is used to hold in place the component to be adhered. Since part of the component is part of the effective mould surface of the mould, the component is at least in part exposed to the plastic compound introduced into the mould. These parts of the component form part of the effective mould surface. The component support is designed to seal with its outer surface circumferential with the inner surface of a holding fixture. The receptacle of such component support is adapted to accommodate and hold in place the component to be adhered to the substrate. The receptacle may be designed as a ring, sealing with its outer surface against the inner surface of a holding fixture and sealing with its inner surface against the outside of the component to be held. According to another embodiment the receptacle is closed at its inner side and only open at its side facing to the mould surface to introduce the component to be held in the receptacle.

The foregoing technique allows to insert different component supports in one and the same holding fixture, which different component supports may have receptacles of different geometry depending on the component to be adhered to the substrate. Therefore, depending on the intended design of the surface of the panel in terms of the components to be fastened, different kinds of components may be adhered to the substrate with one and the same mould simply by using different component supports in one or more holding fixtures. It is to be remarked that this variability is thus achieved only by using different component supports and that the mould as such remains virtually unchanged.

In particular, the inserts (i.e. component supports or dummy supports) are preferably formed of a single piece from a material, which may also serve to hold the component, if they are a component support, and to form a seal that prevents liquid plastic material from unwantedly flowing behind the component and/or inside the holding fixture. Therefore, it is unnecessary to provide an additional seal element.

Since the component supports are introduced into a holding fixture of the mould, the components will always be positioned correctly and accurately in the mould surface on which the substrate is moulded. Therefore the tolerances in positioning the components with respect to the substrate are kept at a minimum. Typically these will be negligible. It will be understood that the minimum tolerances as obtained with this method can not be achieved with most prior art techniques, by which a component is fastened to the backside of a pre-manufactured substrate.

It will be understood that the mould surface of the mould is prepared and adapted for the individual panel to be manufactured prior to applying the plastic compound, by inserting component supports into the holding fixtures of the mould. In those cases in which a component shall not be fastened to the substrate, a dummy support is inserted into such holding fixture. The component is introduced into each receptacle of the component support, prior or after inserting the component supports into the holding fixtures.

In a further step, the plastic compound, from which the substrate is to be formed, is applied onto the mould surface. It can be a flowable reactive mixture, for instance a reactive mixture forming a thermoset polyurethane, which is applied into the mould according to a spray or a reaction injection moulding process. Or it can be a molten thermoplastic material, such as PP, PVC, ABS or TPU which is applied into the mould to form the substrate according to for instance an injection moulding or a (rotational) slush moulding process. After applying the plastic compound into the mould, the plastic compound is subjected to a hardening process, for example a curing process. The bonding forces of the plastic compound introduced into the mould bond the surface of the components not covered by a component support to the substrate. After the hardening process, for example the curing process, is terminated, the substrate with the components adhered thereto is demoulded.

In order to easily insert a component into the receptacle of a component support, the receptacle is designed so that the component may be inserted simply by a push-movement i.e. a movement in a transverse direction to the mould surface. This facilitates also the removal of the components out of the receptacle, for instance during demoulding of the panel from the mould.

In order to save weight, this method allows to design the base portion, for example the base plate of the component to be adhered to the substrate, with one or more openings. With these openings the overall surface coming into contact with the plastic compound is extended. The method according to the invention also allows to design the component support in such a way, that the plastic compound flows behind undercuts of the component itself, for example around the outer termination of a base plate or for example through the one or more openings as described above, and thereby enhancing the pull-off-force of the component adhered (fastened) to the substrate.

Further advantages and embodiments of the invention are disclosed in the following description of a specific embodiment of the invention with reference to the figures. These show in:
- **Fig. 1:**: a schematic cross-sectional view of an open mould assembly, having a lower mould part and an upper mould part,
- **Fig. 2:**: a cross-section of a component support to be inserted into a fixture of the upper mould part of the mould depicted in figure 1 and a component to be held by that component support.
- **Fig. 3:**: the mould assembly of figure 1 with the mould surface of the upper mould being prepared to receive a plastic compound to be moulded in the mould assembly,
- **Fig. 4:**: the closed mould assembly after having introduced a plastic compound into the mould,
- **Fig. 5:**: the mould assembly opened after curing the plastic compound in the closed mould and after demoulding the cured substrate,
- **Fig. 6:**: a part of the upper mould of figure 3 with a different component support inserted in the fixture,
- **Fig. 7:**: a part of the upper mould of figure 3 with a dummy support inserted in the fixture,
- **Fig. 8:**: a part of a further upper mould with a holding fixture and a component support according to a further embodiment, and
- **Fig. 9:**: the arrangement of figure 8 with the component support holding the component in place within the fixture of the upper mould.

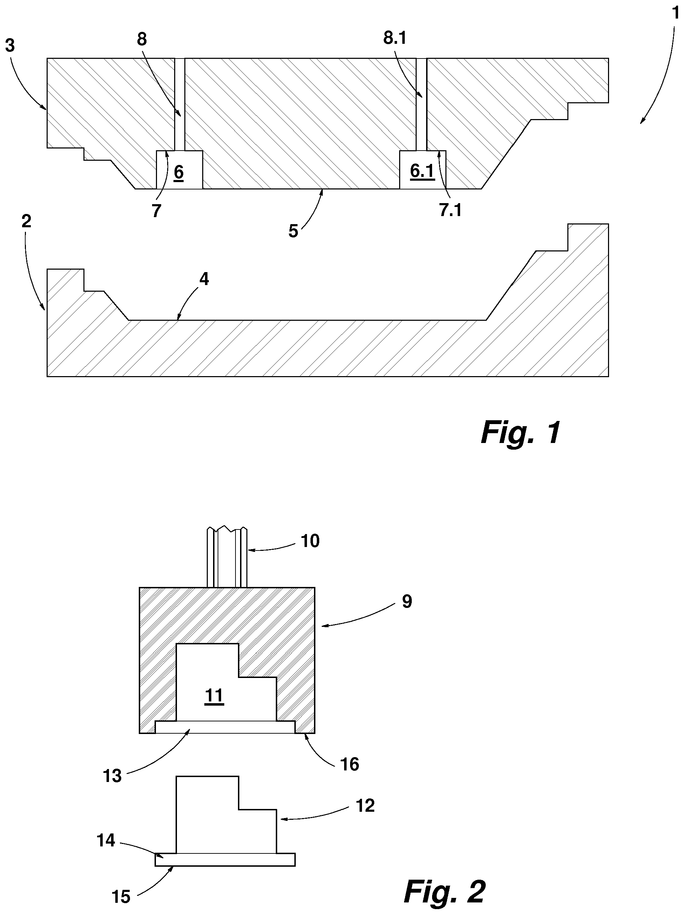

The mould assembly 1 depicted in figure 1 comprises a lower mould part 2 and an upper mould part 3. The mould surfaces 4, 5 respectively of the lower mould part 2 and the upper mould part 3 facing each other, are designed to form the surface structure, which the substrate being manufactured with the mould assembly 1 shall carry on its front surface and its B-surface respectively. In the depicted embodiment the mould surface 4 of the bottom mould part 2 forms the front surface of the substrate to be moulded, whereas the mould surface 5 is responsible for the resemblance of the B-surface of the substrate to be moulded.

The mould assembly 1 of this embodiment is used to manufacture a panel to be used as a backing structure of a trim panel, which in the depicted case could be used as inner lining of a vehicle door.

The upper mould part 3 has several holding fixtures, of which two are depicted in figure 1 and may be identified with the reference numerals 6, 6.1. The holding fixtures 6, 6.1 are recessed areas in respect to the adjacent mould surface 5. A plan view of the holding fixtures 6, 6.1 would show them having a rectangular geometry with rounded corners. From the bottom 7, 7.1 of such holding fixture 6, 6.1 a channel 8, 8.1 is drilled through the upper mould part 3.

In order to prepare the mould surface 5 for a panel to be manufactured with the mould assembly 1, a component support 9, 9.1 is inserted into each holding fixture 6, 6.1. Figure 2 shows in a cross-section the component support 9. The component support 9 is to be held within the holding fixture 6, 6.1 with a bar 10 to be brought through the channel 8. The bar 10 is threaded. The component support 9 has a receptacle 11 open in the direction to the mould surface 5. The receptacle 11 is used to accommodate the component to be adhered to the substrate manufactured with the mould assembly 1. In the depicted embodiment the receptacle 11 is designed to accommodate a doghouse. In figure 2 such doghouse, which is depicted in a side-view manner, is identified with reference numeral 12. The receptacle 11 is stepped and provides a collet 13 to accommodate the base plate 14 of the doghouse. The part of the receptacle 11 adjacent to the collet 13 is designed to accommodate the rest of the doghouse 12. When introduced into the receptacle 11 the bottom side 15 of the doghouse 12 is flush with the bottom side 16 of the component support 9. The doghouse 12, when introduced into the receptacle 11 is arranged therein in such a manner, that the inner surface of the receptacle 11 seals against the outer surface of the doghouse 12, thus inhibiting that any plastic compound creeps between the component support 9 and the doghouse 12.

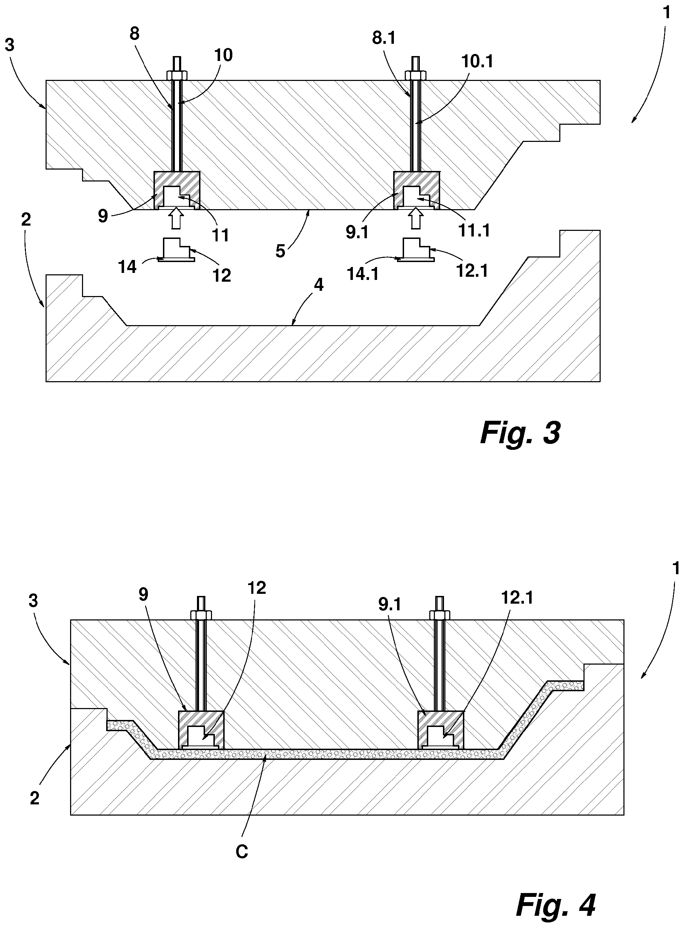

Figure 3 now shows the component support 9 and another identical component support 9.1 introduced into the holding fixtures 6, 6.1 of the mould part 3. The bars 10, 10.1 project through the channels 8, 8.1. Each component support 9, 9.1 is secured by a nut threaded on the bar 8, 8.1 and resting on the outside of the mould part 3 to keep the component support 9, 9.1 in place within the holding fixture 6, 6.1. The component support 9, 9.1 of this embodiment fills the interior of the holding fixture 6, 6.1 completely. The outside surface of each component support 9, 9.1 is abutting the inner surface of the holding fixture 6, 6.1. Therefore, no plastic compound will leak between the outside walls of the component support 9, 9.1 and the inside walls of the holding fixture 6, 6.1.

The component supports 9, 9.1 are manufactured from a material, which is selected so that it will not stick or bond to the plastic compound. Silicone has been found to be an appropriate material for the use as a component support. Also other, preferably self-releasing, materials such as PTFE can be used.

It will be understood that the locking members of the doghouses 12, 12.1 needed for fastening these to the complementary pins of a structure to which the manufactured panel is to be fastened, are well accommodated within the receptacle 11, 11.1. No plastic compound will enter between the outside of the doghouse 12, 12.1 and the inner walls of the receptacle 11, 11.1. Thus, all openings of each doghouse 12, 12.1 are well protected.

Before applying the plastic compound into the mould assembly 1, the doghouses 12, 12.1 are inserted into the receptacles 11, 11.1. The doghouses 12, 12.1 depicted in the embodiment each have a flat base plate 14, 14.1. Only the bottom side 15, 15.1 of the base plates 14, 14.1 of the doghouses 12, 12.1 are exposed to the inside of the mould and thus form part of the effective mould surface 5 of the upper mould part 3. This may be undertaken prior to inserting the component supports 9, 9.1 into the holding fixtures 6, 6.1. It is also possible to insert the doghouses 12, 12.1 into the receptacle 11, 11.1 after the component supports 9, 9.1 have been mounted to the mould 3.

In the embodiment depicted in figures 1 to 7 the component supports are fastened to the mould part by way of threaded bars 10, 10.1. If a component support is to be removed, the nut is removed from the bar 10, 10.1 and the component support can be pushed out of the holding fixture 6, 6.1 by means of the bar 10, 10.1. According to another embodiment the component supports do not carry such bars. With such embodiment the component supports may be held within the holding fixtures of the mould part by way of applying a vacuum onto the channels that have been driven through the mould part. In such an embodiment, the component supports will stay in place due to the underpressure within the channels. Removal of the component supports can be facilitated by reversing the vacuum pump, so that the resulting air pressure pushes the component support out of the holding fixture

Since it is necessary to fill the holding fixtures 6, 6.1 with an insert, i.e. either a component support 9, 9.1, 9.2 or a dummy support 9.4, before introducing the plastic compound into the mould, the holding fixtures 6, 6.1 may be designed with means to detect the presence of such support. In case an insert is not present, this would be detected and an alarm signal could be generated. In the same way it is possible to detect the presence of a component in the receptacle of a component support. The detecting means could reach through a detection means opening on the backside of such component support detecting the presence of a component within the receptacle or not. As detection means a rather simple electric contact switch may be employed.

After preparing the mould surface 5 by inserting component supports 9, 9.1 or dummy supports into the holding fixtures 6, 6.1, the substrate forming plastic compound is applied into the mould. The mould parts 2, 3 are closed for the hardening process, which in the case of this embodiment is a curing process of the plastic compound C (see figure 4). Due to the contact between the bottom side 15, 15.1 of the base plates 14, 14.1 of the doghouses 12, 12.1, the surfaces 15, 15.1 are part of the effective mould surface 5 of the upper mould part 3 and thus in contact with the plastic compound C. Being in contact with the plastic compound C, the bonding forces of the flowable plastic compound C adhere (fasten) the doghouses 12, 12.1 to the plastic compound C, which after curing is referenced to as substrate. The substrate is rigid in order to be used as a backing structure of a trim panel.

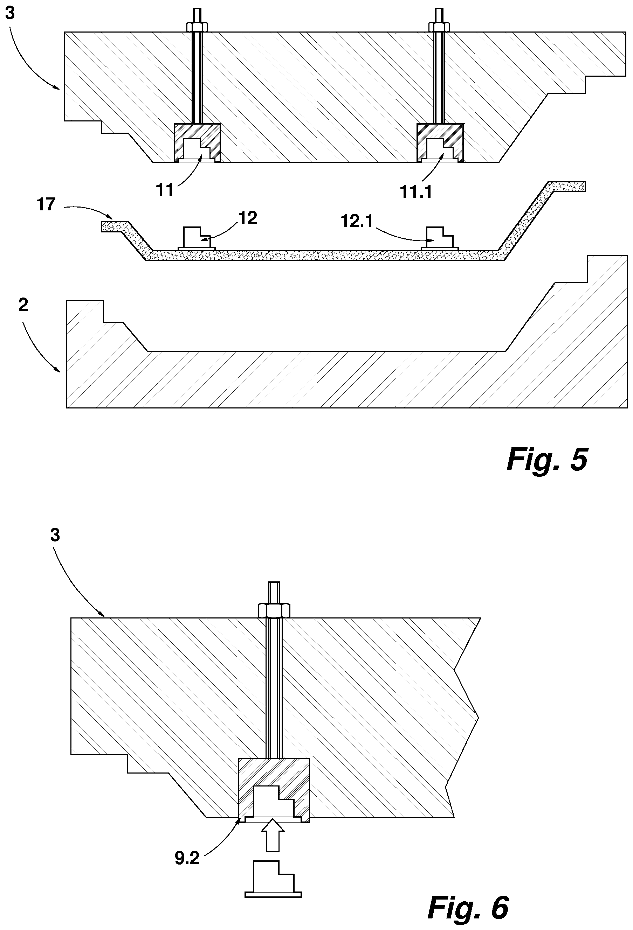

After the curing process, the mould parts 2, 3 are separated and the rigid substrate together with the doghouses 12, 12.1 adhered to its B-surface - the panel 17 - is demoulded. This is undertaken by simply pulling-off the panel 17 from the upper mould part 3 (see figure 5).

It will be a apparent for a person skilled in the art, that other substrate moulding processes may be used in the method according to the invention, including but not limited to reaction injection moulding (RIM), injection moulding, slush moulding, spraying. It will also be apparent, that for the process of adhering a component to the substrate it is not necessary, that the substrate in total is manufactured in the manner described. It is namely also possible, to introduce into the mould a pre-manufactured part of the substrate and then apply at least on that surface the plastic compound, to which the at least one component is to be adhered to.

Figure 6 shows a part of the upper mould part 3 with its holding fixture 6, in which an alternative component support 9.2 is inserted. The bottom side of the component support 9.2 is not flush with the adjacent mould surface 5, but protrudes slightly from it, for example by 0.5 - 1.5 mm. As a result, when using such kind of component support the component will be adhered to the surface of the substrate in a recess formed with the component support 9.2. On the surface, which most likely will be the B-surface of a panel of this kind, the component may easily be identified by its position in a slight recess.

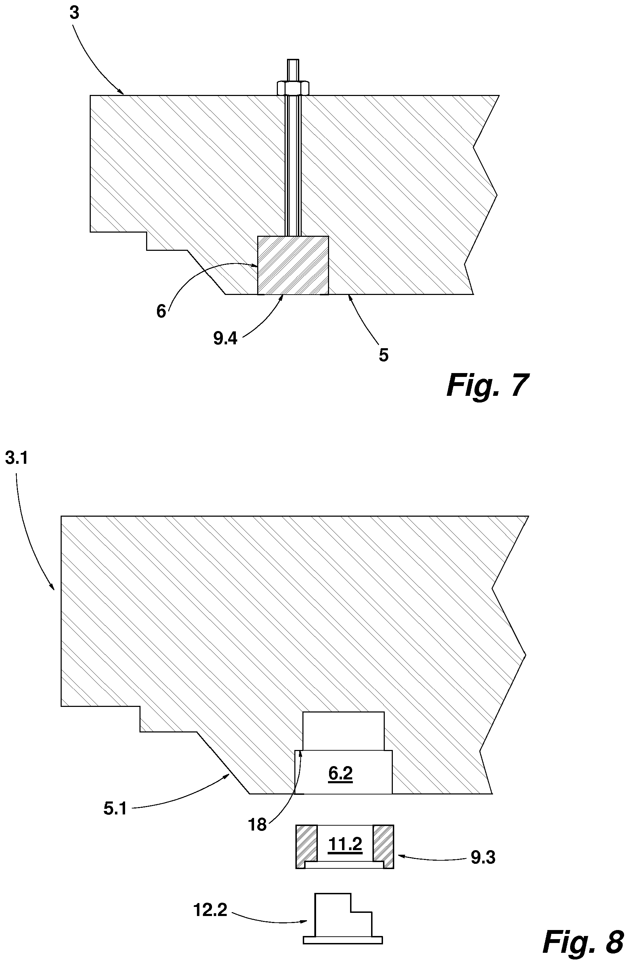

Figure 7 shows a part of the upper mould part 3 with its holding fixture 6, into which a dummy support 9.4 is inserted. The dummy support 9.4 simply serves to fill the recessed area of the holding fixture 6 and thus has no receptacle. Its bottom side is flush with the adjacent mould surface 5, in order to provide an effective mould surface that resembles the mould surface as if there is no holding fixture 6 at all. However, at least a close inspection of the panel produced using the dummy support 9.4 would reveal that the effective mould surface is not "perfect", i.e. the transition between the bottom side of the dummy support 9.4 and the surrounding mould surface may be visible. For instance, a very small burr may be present on the panel, resulting from a very small and shallow gap (e.g. a few hundredths of a millimeter in width and depth) between the dummy support 9.4 and the mould surface 5. Also, the microstructure of the surface of the dummy support 9.4 may differ from that of the mould surface 5. This may also be revealed by close inspection of the produced panel. However, since these effects usually refer to the B-surface of the panel, which is not visible after installation, they cannot be considered as drawbacks.

The alternative component support 9.2 or the dummy support 9.4 may be chosen instead of component support 9, e.g. according to customer requirements, without making any changes to the corresponding holding fixture 6. The mould may thus be used to manufacture different variants of basically one and the same panel.

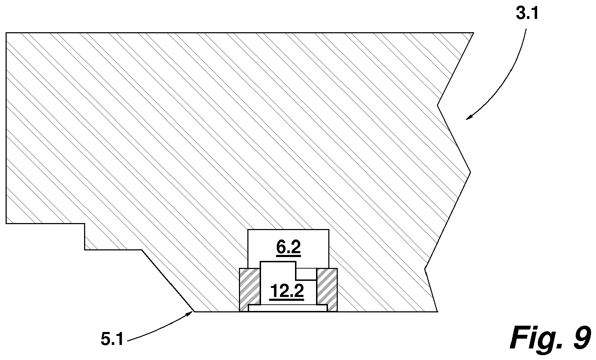

Figure 8 shows a part of another upper mould part 3.1 with a holding fixture 6.2. The holding fixture 6.2 of this embodiment is stepped in order to provide a ledge 18 facing in the direction to the mould surface 5.1. The holding fixture 6.1 is designed to receive a component support 9.3 which is designed as a ring. The receptacle 11.2 of the component support 9.3 is the ring opening. The receptacle 11.2 is adapted to receive a doghouse 12.2, which is identical to the doghouses 12, 12.1 of the previous embodiments. When inserted into the holding fixture 6.2, the component support 3 abuts in a sealingly manner with its outer surface against the inner surface of the holding fixture 6.2. The ledge 18 is used to abut the backside of the component support 9.3 and therefore limiting its amount of insertion into the holding fixture 6.2. The component support 9.3 is designed to be flush with its front surface with the adjacent mould surface 5.1. Figure 9 shows the component support 9.3 inserted into the holding fixture 6.2 and the doghouse 12.2 introduced into the receptacle 11.2. The parts are held in place by friction. It will be understood, that also with this embodiment, holding the component support and the doghouse in place by applying vacuum into the holding fixture 6.2 as described to previous embodiments, may be possible. When using a component support with its backside open, for example the component support 9.3, one and the same component support may be used for holding different components, to be adhered to the substrate, in place within the mould. In contrast to component supports with a closed backside facing into the holding fixture of the mould part, this embodiment allows to hold components differing in height within one and the same holding fixture keeping the base of the component in the same position, for example flush with the adjacent mould surface.

In order to work the invention it will be understood, that the choice of materials to be brought in contact to each other - substrate and component - are each chosen from a group of materials, which show the required bonding forces when brought in contact to each other prior to completion of hardening of the plastic compound of which the substrate is manufactured from. In the depicted example pull-off-forces have been obtained when using conventional doghouses of PP-material that have been approximately twice as high compared to the same doghouse glued the B-surface of a substrate using an adhesive. It is believed that such phenomenon has not been described before.

In case the two materials to be bonded to each other using the method disclosed above, do not have the required material properties in terms of bonding capacity, it is also possible to pre-treat the surface of the component coming into contact with the plastic compound prior to applying this compound. Such treatment is undertaken in order to passivate the surface, for example with a flame treatment.

In the embodiment depicted and described with reference to the figures the panel manufactured carries the components on its B-surface. It is also possible to adhere with the same method components to the front surface of such substrate as well as components to both surfaces of the substrate.

Further, it will be understood that a variety of different types of components, having for instance different purposes than doghouses, may be fastened to such substrate to manufacture a typically rigid panel. It is assumed, though, that in many applications the components will be some kind of locking component or a part of such locking component. In cases, in which the front surface of such panel is the visible surface, also decorative components may be adhered to the substrate with the method described.

### Reference numerals

- 1: mould assembly
- 2: bottom mould part
- 3,3.1: upper mould part
- 4: mould surface
- 5, 5.1: mould surface
- 6, 6.1, 6.2: holding fixture
- 7, 7.1: bottom side
- 8,8.1: channel
- 9, 9.1, 9.2, 9.3: component support
- 9.4: dummy support
- 10, 10.1: bar
- 11, 11.1: receptacle
- 12, 12.1, 12.2: doghouse
- 13, 13.1: collet
- 14, 14.1: base plate
- 15, 15.1: bottom side
- 16: bottom side
- 17: panel
- 18: ledge

- C: plastic compound

## Claims

1. Method to manufacture a panel comprising a substrate with at least one surface of plastic material and further comprising at least one component adhered to the surface of plastic material of the substrate, whereas at least the plastic surface of the substrate to which such component is to be adhered, is manufactured by way of a primary forming process, whereas the at least one component (12, 12.1, 12.2) is adhered to the substrate using the bonding properties of the plastic compound effective during the primary forming process forming the plastic surface when manufacturing the substrate, which method is conducted using the following steps:
- providing a mould (3) having a mould surface with at least one holding fixture (6, 6.1) being a recessed area with respect to the adjacent mould surface (5),
- providing a pre-manufactured component (12, 12.1, 12.2) to be adhered to the plastic surface of the substrate,
- providing a plurality of inserts (9, 9.1, 9.2, 9.3, 9.4) for insertion into a holding fixture (6, 6.1) and being detachably connected to the holding fixture (6, 6.1),
- inserting into one or more of the holding fixtures (6, 6.1) a component support (9, 9.1, 9.2, 9.3) in a sealing arrangement with the inner surface of a holding fixture (6, 6.1, 6.2) and provided with at least one receptacle (11, 11.1, 11.2) adapted to at least partially accommodate the pre-manufactured component (12, 12.1, 12.2) to be adhered, the receptacle (11, 11.1, 11.2) being designed so that the surface of the component (12, 12.1, 12.2) not being accommodated within the receptacle (11, 11.1, 11.2) and facing in the direction of the mould surface forms part of the effective mould surface, in which receptacle (11, 11.1, 11.2) a component (12, 12.1, 12.2) has been or is introduced prior to the following steps so that the component (12, 12.1, 12.2) is held by the component support (9, 9.1, 9.2, 9.3),
- applying the substrate forming plastic compound (C) onto said mould surface,
- allowing the plastic compound (C) to harden,
- demoulding the substrate with the at least one component (12, 12.1, 12.2) adhered to one of its surfaces from the mould (1) and thus having manufactured the panel,
**characterized in that**
- at least two different inserts (9, 9.2, 9.4) are adapted for being alternatively inserted into one and the same holding fixture (6, 6.1) and for being detachably connected to the holding fixture (6, 6.1), of which inserts at least one is a component support (9, 9.1, 9.2, 9.3) for holding the component (12, 12.1, 12.2), and at least one is a dummy support (9.4) for insertion into a holding fixture (6, 6.1) to fill the recessed area and complete the mould surface in the area of the holding fixture (6, 6.1),
- choosing one of said different inserts (9, 9.2, 9.4) for insertion into a holding fixture (6, 6.1), and
- inserting into one or more of the holding fixtures (6, 6.1) a dummy support (9.4) before applying the substrate forming plastic compound (C).

2. Method according to claim 1, **characterized in that** at least one component support (9, 9.1, 9.2) has a receptacle which is only open in the direction of the mould surface.

3. Method according to one of claims 1 or 2, **characterized in that** at least one component support (9.3) is designed as a ring.

4. Method according to one of claims 1 to 3, **characterized in that** the component (12, 12.1, 12.2) is accommodated in the receptacle (11, 11.1, 11.2) of the component support (9, 9.1) with its base surface (15) being in a substantially flush arrangement with the base surface (16) of the component support (9, 9.1).

5. Method according to one of claims 1 to 4, **characterized in that** at least two different component supports (9, 9.2) are adapted for being alternatively inserted into one and the same holding fixture (6).

6. Method according to one of claims 1 to 5 , **characterized in that** the substrate material is made of a reactive curing material, in particular a polyurethane, and that at least those surfaces of the component (12, 12.1, 12.2) which get into contact with the substrate are of a thermoplastic material, for instance polypropylene.

7. Method according to one of claims 1 to 6, **characterized in that** the substrate is a composite sandwich panel, in particular a light-weight substrate, comprising a pre-manufactured core and at least one surface layer, to which the at least one component is adhered, which surface layer is manufactured by way of the primary forming process.

8. Method according to one of claims 1 to 7, **characterized in that** the component (12, 12.1, 12.2) is a locking component such as a doghouse, to be engaged with a locking pin, which is, when engaged with the locking appliance, form-fittingly connected with the locking component.

9. Method according to one of claims 1 to 8, **characterized in that** the panel (15) is the substrate or backing structure of a trim panel to be fastened to the interior side of a part of a vehicle, a boat or the like.

10. Mould system for manufacturing a panel comprising a substrate with at least one surface of plastic material and further comprising at least one component (12, 12.1, 12.2) adhered to the surface of plastic material of the substrate, the mould system comprising:
- a mould (3) having a mould surface with at least one holding fixture (6, 6.1) being a recessed area with respect to the adjacent mould surface (5),
- a plurality of inserts (9, 9.1, 9.2, 9.3, 9.4), for insertion into a holding fixture (6, 6.1) and being detachably connected to the holding fixture (6, 6.1),
**characterized in that**
- at least two different inserts (9, 9.2, 9.4) are adapted for being alternatively inserted into one and the same holding fixture (6, 6.1) and for being detachably connected to the holding fixture (6, 6.1), wherein at least one insert is a component support (9, 9.1, 9.2, 9.3) for holding a pre-manufactured component (12, 12.1, 12.2) to be adhered to the plastic surface of the substrate, the component support (9, 9.1, 9.2, 9.3) being adapted to seal with the inner surface of a holding fixture (6, 6.1, 6.2) and provided with at least one receptacle (11, 11.1, 11.2) adapted to at least partially accommodate the component (12, 12.1, 12.2), the receptacle (11, 11.1, 11.2) being designed so that the surface of the component (12, 12.1, 12.2) not being accommodated within the receptacle (11, 11.1, 11.2) and facing in the direction of the mould surface forms part of the effective mould surface, and wherein at least one insert is a dummy support (9.4), adapted to complete the mould surface in the area of the holding fixture (6, 6.1).

11. Mould system according to claim 10, **characterized in that** at least one component support (9, 9.1, 9.2) has a receptacle which is only open in the direction of the mould surface.

12. Mould system according to one of claims 10 or 11, **characterized in that** at least one component support (9.3) is designed as a ring.

13. Mould system according to one of claims 10 to 12, **characterized in that** at least two different component supports (9, 9.2) are adapted for being alternatively inserted into one and the same holding fixture (6).

14. Mould system according to one of claims 10 to 13, **characterized in that** it comprises means (10, 10.1) for removing the insert (9, 9.1, 9.2, 9.4) from the holding fixture (6, 6.1), which means (10, 10.1) are operable from outside the mould (3).

## Patentansprüche

1. Verfahren zum Herstellen einer Platte, umfassend ein Substrat mit mindestens einer Oberfläche aus Kunststoffmaterial und ferner umfassend mindestens ein Bauteil, das an der Oberfläche aus Kunststoffmaterial des Substrats anhaftet, wobei mindestens die Kunststoffoberfläche des Substrats, an der das Bauteil anhaften soll, durch einen Urformvorgang hergestellt wird, wobei das mindestens eine Bauteil (12, 12.1, 12.2) an das Substrat unter Verwendung der Bindungseigenschaften der Kunststoffmasse, die während des Urformvorgangs, der die Kunststoffoberfläche bei der Herstellung des Substrats bildet, wirksam ist, angehaftet wird, wobei das Verfahren unter Verwendung der folgenden Schritte durchgeführt wird:
- Bereitstellen einer Form (3), die eine Formoberfläche mit mindestens einer Haltevorrichtung (6, 6.1), die einen abgesenkten Bereich in Bezug zur benachbarten Formoberfläche (5) darstellt, aufweist,
- Bereitstellen eines vorgefertigten Bauteils (12, 12.1, 12.2), das an die Kunststoffoberfläche des Substrats anzuhaften ist,
- Bereitstellen einer Vielzahl von Einsätzen (9, 9.1, 9.2, 9.3, 9.4) zum Einsetzen in eine Haltevorrichtung (6, 6.1) und die lösbar mit der Haltevorrichtung (6, 6.1) verbunden sind,
- Einsetzen eines Bauteilträgers (9, 9.1, 9.2, 9.3) in eine oder mehrere der Haltevorrichtungen (6, 6.1) in einer abdichtenden Anordnung mit der Innenoberfläche einer Haltevorrichtung (6, 6.1, 6.2) und der mit mindestens einer Aufnahme (11, 11.1, 11.2) versehen ist, die angepasst ist, das anzuhaftende vorgefertigte Bauteil (12, 12.1, 12.2) zumindest teilweise aufzunehmen, wobei die Aufnahme (11, 11.1, 11.2) so ausgestaltet ist, dass die Oberfläche des Bauteils (12, 12.1, 12.2), die nicht in der Aufnahme (11, 11.1, 11.2) aufgenommen ist und die der Richtung der Formoberfläche zugewandt ist, einen Teil der wirksamen Formoberfläche bildet, wobei ein Bauteil (12, 12.1, 12.2) vor den folgenden Schritten in die Aufnahme (11, 11.1, 11.2) eingeführt wurde oder wird, sodass das Bauteil (12, 12.1, 12.2) von dem Bauteilträger (9, 9.1, 9.2, 9.3) gehalten wird,
- Aufbringen der substratbildenden Kunststoffmasse (C) auf die Formoberfläche,
- Ermöglichen der Kunststoffmasse (C) auszuhärten,
- Entformen des Substrats mit dem mindestens einem Bauteil (12, 12.1, 12.2), das an einer seiner Oberflächen aus der Form (1) anhaftet und somit zur Herstellung der Platte führt,
**dadurch gekennzeichnet, dass**
- mindestens zwei verschiedene Einsätze (9, 9.2, 9.4) angepasst sind, abwechselnd in ein und dieselbe Haltevorrichtung (6, 6.1) eingesetzt zu werden und mit der Haltevorrichtung (6, 6.1) lösbar verbunden zu werden, wobei mindestens einer der Einsätze ein Bauteilträger (9, 9.1, 9.2, 9.3) zum Halten des Bauteils (12, 12.1, 12.2) ist, und mindestens einer ein Dummyträger (9.4) zum Einsetzen in eine Haltevorrichtung (6, 6.1) ist, um den abgesenkten Bereich zu füllen und um die Formoberfläche im Bereich der Haltevorrichtung (6, 6.1) zu vervollständigen,
- Wählen eines der verschiedenen Einsätze (9, 9.2, 9.4) zum Einsetzen in eine Haltevorrichtung (6, 6.1), und
- Einsetzen eines Dummyträgers (9.4) in eine oder mehrere der Haltevorrichtungen (6, 6.1) vor dem Auftragen der substratbildenden Kunststoffmasse (C).

2. Verfahren nach Anspruch 1, **dadurch gekennzeichnet, dass** mindestens ein Bauteilträger (9, 9.1, 9.2) eine Aufnahme aufweist, die nur in Richtung der Formoberfläche geöffnet ist.

3. Verfahren nach einem der Ansprüche 1 oder 2, **dadurch gekennzeichnet, dass** mindestens ein Bauteilträger (9.3) als ein Ring ausgestaltet ist.

4. Verfahren nach einem der Ansprüche 1 bis 3, **dadurch gekennzeichnet, dass** das Bauteil (12, 12.1, 12.2) in der Aufnahme (11, 11.1, 11.2) des Bauteilträgers (9, 9.1) aufgenommen ist, wobei seine Grundfläche (15) im Wesentlichen bündig mit der Grundfläche (16) des Bauteilträgers (9, 9.1) angeordnet ist.

5. Verfahren nach einem der Ansprüche 1 bis 4, **dadurch gekennzeichnet, dass** mindestens zwei verschiedene Bauteilträger (9, 9.2) angepasst sind, um abwechselnd in ein und dieselbe Haltevorrichtung (6) eingesetzt zu werden.

6. Verfahren nach einem der Ansprüche 1 bis 5, **dadurch gekennzeichnet, dass** das Substratmaterial aus einem reaktiven aushärtenden Material, insbesondere einem Polyurethan, gefertigt ist und dass zumindest diese Oberflächen des Bauteils (12, 12.1, 12.2), die mit dem Substrat in Berührung kommen, aus einem thermoplastischen Material, zum Beispiel Polypropylen, sind.

7. Verfahren nach einem der Ansprüche 1 bis 6, **dadurch gekennzeichnet, dass** das Substrat eine Sandwichverbundplatte, insbesondere ein leichtgewichtiges Substrat, ist, das einen vorgefertigten Kern und mindestens eine Oberflächenschicht umfasst, an der das mindestens eine Bauteil angehaftet ist, wobei die Oberflächenschicht durch den Urformvorgang hergestellt wird.

8. Verfahren nach einem der Ansprüche 1 bis 7, **dadurch gekennzeichnet, dass** das Bauteil (12, 12.1, 12.2) ein Verriegelungselement, beispielsweise eine Einsatzöffnung, ist, das mit einem Verriegelungsbolzen in Eingriff zu bringen ist, der beim Eingriff mit der Verriegelungsvorrichtung formschlüssig mit dem Verriegelungselement verbunden ist.

9. Verfahren nach einem der Ansprüche 1 bis 8, **dadurch gekennzeichnet, dass** die Platte (15) das Substrat oder die Stützstruktur einer Verkleidungsplatte ist, die an der Innenseite eines Teils eines Fahrzeugs, eines Bootes oder dergleichen befestigt werden soll.

10. Formsystem zum Herstellen einer Platte, umfassend ein Substrat mit mindestens einer Oberfläche aus Kunststoffmaterial und ferner umfassend mindestens ein Bauteil (12, 12.1, 12.2), das an der Oberfläche aus Kunststoffmaterial des Substrats anhaftet, wobei das Formsystem umfasst:
- eine Form (3), die eine Formoberfläche mit mindestens einer Haltevorrichtung (6, 6.1), die einen abgesenkten Bereich in Bezug zur benachbarten Formoberfläche (5) darstellt, aufweist,
- eine Vielzahl von Einsätzen (9, 9.1, 9.2, 9.3, 9.4) zum Einsetzen in eine Haltevorrichtung (6, 6.1) und die lösbar mit der Haltevorrichtung (6, 6.1) verbunden sind,
**dadurch gekennzeichnet, dass**
- mindestens zwei verschiedene Einsätze (9, 9.2, 9.4) angepasst sind, um abwechselnd in ein und dieselbe Haltevorrichtung (6, 6.1) eingesetzt zu werden und um mit der Haltevorrichtung (6, 6.1) lösbar verbunden zu werden, wobei mindestens ein Einsatz ein Bauteilträger (9, 9.1, 9.2, 9.3) zum Halten eines vorgefertigten Bauteils (12, 12.1, 12.2) ist, das an die Kunststoffoberfläche des Substrats anzuhaften ist, wobei der Bauteilträger (9, 9.1, 9.2, 9.3) so angepasst ist, dass er mit der Innenoberfläche einer Haltevorrichtung (6, 6.1, 6.2) abdichtet und mit mindestens einer Aufnahme (11, 11.1, 11.2) versehen ist, die angepasst ist, das Bauteil (12, 12.1, 12.2) zumindest teilweise aufzunehmen, wobei die Aufnahme (11, 11.1, 11.2) so ausgestaltet ist, dass die Oberfläche des Bauteils (12, 12.1, 12.2), die nicht in der Aufnahme (11, 11.1, 11.2) aufgenommen ist und die der Richtung der Formoberfläche zugewandt ist, einen Teil der wirksamen Formoberfläche bildet, und wobei mindestens ein Einsatz ein Dummyträger (9.4) ist, der angepasst ist, die Formoberfläche im Bereich der Haltevorrichtung (6, 6.1) zu vervollständigen.

11. Formsystem nach Anspruch 10, **dadurch gekennzeichnet, dass** mindestens ein Bauteilträger (9, 9.1, 9.2) eine Aufnahme aufweist, die nur in Richtung der Formoberfläche geöffnet ist.

12. Formsystem nach einem der Ansprüche 10 oder 11, **dadurch gekennzeichnet, dass** mindestens ein Bauteilträger (9.3) als ein Ring ausgestaltet ist.

13. Formsystem nach einem der Ansprüche 10 bis 12, **dadurch gekennzeichnet, dass** mindestens zwei verschiedene Bauteilträger (9, 9.2) angepasst sind, um abwechselnd in ein und dieselbe Haltevorrichtung (6) eingesetzt zu werden.

14. Formsystem nach einem der Ansprüche 10 bis 13, **dadurch gekennzeichnet, dass** es Mittel (10, 10.1) zum Entfernen des Einsatzes (9, 9.1, 9.2, 9.4) aus der Haltevorrichtung (6, 6.1) umfasst, wobei die Mittel (10, 10.1) von außerhalb der Form (3) betriebsfähig sind.

## Revendications

1. Procédé de fabrication d'un panneau comportant un substrat avec au moins une surface en matériau plastique et comportant par ailleurs au moins un composant collé à la surface en matériau plastique du substrat, dans lequel au moins la surface en matériau plastique du substrat à laquelle ledit composant doit être collé est fabriquée au moyen d'un processus de mise en forme, dans lequel au moins un composant (12, 12.1, 12.2) est collé au substrat en utilisant les propriétés d'adhérence de la matière plastique pendant le processus de mise en forme de la surface en matériau plastique lors de la fabrication du substrat, ledit procédé étant mis en oeuvre au travers des étapes suivantes :
- on fournit un moule (3) ayant une surface comportant au moins un dispositif de maintien (6, 6.1) formant une zone en retrait par rapport à la surface adjacente (5),
- on fournit un composant préfabriqué (12 ; 12.1, 12.2) prévu pour adhérer à la surface en matériau plastique du substrat,
- on fournit une série d'inserts (9, 9.1, 9.2, 9.3, 9.4) prévus pour être insérés dans un dispositif de maintien (6, 6.1) et étant connectée de manière amovible au dispositif de maintien (6, 6.1),
- on insère dans un ou plusieurs des dispositifs de maintien (6, 6.1) un support de composant (9, 9.1, 9.2, 9.3) jointif avec la surface interne du dispositif de maintien (6, 6.1, 6.2) et comportant au moins un réceptacle (11, 11.1, 11.2) conçu pour loger au moins partiellement le composant préfabriqué (12, 12.1, 12.2) à coller, le réceptacle (11, 11.1, 11.2) étant configuré de telle sorte que la surface du composant (12, 12.1, 12.2) qui n'est pas logée dans le réceptacle (11, 11.1, 11.2) et qui fait face à la surface du moule fasse partie de la surface effective du moule, un composant (12, 12.1, 12.2) ayant été ou étant introduit dans ledit réceptacle (11, 11.1 11.2) préalablement aux étapes suivantes, de telle sorte que le composant (12, 12.1, 12.2) soit maintenu par le support de composant (9, 9.1, 9.2, 9.3),
- on applique le mélange de formation du substrat plastique (C) sur ladite surface du moule,
- on laisse le composé plastique (C) se durcir,
- on démoule le substrat avec au moins un composant (12, 12.1, 12.2) adhérant à une de ses surfaces dans le moule (1) et en ayant ainsi réalisé le panneau,
**caractérisé en ce que**
- au moins deux inserts différents (9, 9.2, 9.4) sont conçus pour être insérés en alternance dans un même dispositif de maintien (6, 6.1) et pour être connectés de manière amovible dans ledit support, l'un au moins desdits inserts étant un support de composant (9, 9.1, 9.2, 9.3), pour maintenir le composant (12, 12.1, 12.2) et l'un au moins étant un support factice (9.4) prévu pour être inséré dans un dispositif de maintien (6, 6.1) pour remplir la zone en retrait et compléter la surface du moule dans la zone du dispositif de maintien (6, 6.1),
- on choisit un des différents inserts (9, 9.2, 9.4) pour être inséré dans un dispositif de maintien (6, 6.1) et,
- on insère dans l'un ou plus des dispositifs de maintien (6, 6.1) un support factice (9.4) avant d'appliquer le substrat formant le composé plastique (C).

2. Procédé selon la revendication 1, **caractérisé en ce que** au moins un support de composant (9, 9.1, 9.2) comporte un réceptacle qui n'est ouvert qu'en direction de la surface du moule.

3. Procédé selon l'un des revendications 1 ou 2, **caractérisé en ce que** au moins un support de composant (9.3) a la forme d'un anneau.

4. Procédé selon l'une des revendications 1 à 3, **caractérisé en ce que** le composant (12, 12.1, 12.2) est logé dans le réceptacle (11, 11.1, 11.2) du support de composant (9, 9.1) avec sa base (15) affleurant substantiellement la base (16) du support de composant (9, 9.1).

5. Procédé selon l'une des revendications 1 à 4, **caractérisé en ce que** au moins deux supports de composant différents (9, 9.2) sont conçus pour être insérés en alternance dans un même dispositif de maintien (6).

6. Procédé selon l'une des revendications 1 à 5, **caractérisé en ce que** le substrat est réalisé dans un matériau réactif réticulé, en particulier un polyuréthanne, et **en ce que** au moins les surfaces du composant (12, 12.1, 12.2) qui viennent en contact avec le substrat sont réalisées dans un matériau thermoplastique, par exemple du polypropylène.

7. Procédé selon l'une des revendications 1 à 6, **caractérisé en ce que** le substrat est un panneau composite sandwich, en particulier un substrat léger, comportant un noyau préfabriqué et au moins une couche de surface, à laquelle au moins un composant est collé, la couche de surface étant manufacturée au moyen du processus de mise en forme.

8. Procédé selon l'une des revendications 1 à 7, **caractérisé en ce que** le composant (12, 12.1, 12.2) est un composant de verrouillage tel qu'un crochet de sûreté, prévu pour coopérer avec une goupille, laquelle, lorsqu'elle est engagée avec le dispositif de verrouillage, est fixée au composant de verrouillage, par complémentarité de formes.

9. Procédé selon l'une des revendications 1 à 8, **caractérisé en ce que** le panneau (15) est le substrat ou la structure arrière d'une garniture devant être fixé à la paroi interne d'une partie d'un véhicule d'un bateau ou similaire.

10. Moule pour réaliser un panneau comportant un substrat avec au moins une surface en matériau plastique et comportant par ailleurs au moins un composant (12, 12.1, 12.2) collé à la surface du substrat, le moule comportant :
- un moule (3) avec une surface avec au moins un dispositif de maintien (6, 6.1) logé dans une zone en retrait par rapport à la surface adjacente (5) du moule,
- une série d'inserts (9, 9.1, 9.2, 9.3, 9.4) prévus pour être insérés dans un dispositif de maintien (6, 6.1) et étant connectés de manière amovible au dispositif de maintien (6, 6.1),
**caractérisé en ce que**
- au moins deux inserts différents (9, 9.2, 9.4) sont conçus pour être insérés en alternance dans un même dispositif de maintien (6, 6.1) et pour être connectés de manière amovible au dispositif de maintien (6, 6.1), dans lequel au moins un insert est un support de composant (9, 9.1, 9.2, 9.3) destiné à maintenir un composant préfabriqué (12, 12.1, 12.2) devant être collé à la surface en plastique du substrat, le support de composant (9, 9.1, 9.2, 9.3) étant conçu pour adhérer à la surface interne d'un dispositif de maintien (6, 6.1, 6.2) et comportant au moins un réceptacle (11, 11.1, 11.2) conçu pour loger au moins en partie le composant (12, 12.1, 12.2), le réceptacle (11, 11.1, 11.2) étant conçu de telle sorte que la surface du composant (12, 12.1, 12.2) qui n'est pas logée à l'intérieur du réceptacle (11, 11.1, 11.2) et fait face à la surface du moule fasse partie de la surface effective du moule, et dans lequel au moins un insert est un support factice (9.4) prévu pour compléter la surface du moule dans la zone du dispositif de maintien (6, 6.1).

11. Moule selon la revendication 10, **caractérisé en ce que** au moins un support de composant (9, 9.1, 9.2) comporte un réceptacle qui n'est ouvert qu'en direction de la surface du moule.

12. Moule selon l'une des revendications 10 ou 11, **caractérisé en ce que** au moins un support de composant (9.3) a la forme d'un anneau.

13. Moule selon l'une des revendications 10 à 12, **caractérisé en ce que** au moins deux supports de composant différents (9, 9.2) sont prévus pour être insérés en alternance dans un même dispositif de maintien (6).

14. Moule selon l'une des revendications 10 à 13, **caractérisé en ce qu'**il comporte des moyens (10, 10.1) pour retirer l'insert (9, 9.1, 9.2., 9.4) du dispositif de maintien (6, 6.1), lesdits moyens (10, 10.1) étant actionnables depuis l'extérieur du moule (3).
